# EUROPÄISCHE PATENTSCHRIFT

(11) **EP 0 689 921 B1**
(45) Veröffentlichungstag und Bekanntmachung des Hinweises auf die Patenterteilung: **17.10.2001**
(21) Anmeldenummer: 95105559.9
(22) Anmeldetag: 12.04.1995
(51) Int. Cl.: B29C 45/17

(54) **Verfahren zum Trocknen eines Werkzeugs**
Method for drying a mould
Procédé pour sécher un moule

(30) Priorität: 30.06.1994 DE 4422674
(43) Veröffentlichungstag der Anmeldung: 03.01.1996
(73) Patentinhaber: N.V. Resilux, B-9230 Wetteren (BE); SOMOS GmbH, D-64331 Weiterstadt (DE)
(72) Erfinder: Becker, Achim, D-64289 Darmstadt (DE); Zlotos, Michael, D-64584 Biebesheim (DE)
(74) Vertreter: Voth, Gerhard, Dipl.-Ing.

(56) Entgegenhaltungen:
- WO-A-86/01144
- GB-A- 849 351
- US-A- 3 789 093
- US-A- 4 151 236
- KUNSTSTOFFE, Bd. 76, Nr. 1, Januar 1986 MUNCHEN DE, Seiten 32-34, EGLE 'Vermeiden von Schwitzwasser auf Spritzgiess- und Blaswerkzeugen'

## Beschreibung

Die Erfindung betrifft ein Verfahren zum Trocknen eines Werkzeugs insbesondere eines gekühlten Spritzgießwerkzeuges.

Bei der Herstellung von Kunststoffteilen im Spritzgießverfahren ist es zur Reduzierung der Taktzeiten erforderlich, das Spritzgießwerkzeug zu kühlen. Je wirksamer die Kühlung ist, das heißt je schneller die Wärme von dem erzeugten Teil abgezogen werden kann um so rascher erstarrt das Kunststoffteil und kann dem Werkzeug entnommen werden.

Es hat sich als zweckmäßig erwiesen, das Kühlmittel für das Werkzeug mit einer Temperatur von ca. 5 °C demselben zuzuführen. Wird bei einem derart gekühlten Werkzeug das fertig gespritzte Kunststoffteil entnommen, so bildet sich aufgrund der Umgebungsluft an dem gekühlten Werkzeug sehr schnell Kondenswasser. Dieses Kondenswasser verursacht bei dem nächsten Spritzgießvorgang Schlieren auf der Oberfläche des herzustellenden Kunststoffteils. Es wurde deshalb bisher versucht, das Werkzeug mit trockener Luft zu entfeuchten. Diese Luft wurde unmittelbar an das Werkzeug geblasen und strömte in den Raum ab. Zur Verhinderung eines undefinierten Abströmens war das Werkzeug teilweise gekapselt.

Ein Nachteil des bisher beschriebenen Verfahrens liegt darin, daß eine sehr hohe Luftmenge erforderlich ist, um das Werkzeug ausreichend trocken zu halten. Die hohe Menge an zugeführter Trockenluft führt natürlich auch zu einem hohen Energiebedarf, so daß der Wirkungsgrad einer solchen Trocknungseinrichtung äußerst ungünstig war.

Der Erfindung liegt deshalb die Aufgabe zugrunde, eine Werkzeugtrocknung zu schaffen, die hinsichtlich des Wirkungsgrades optimiert ist und eine hohe Umweltverträglichkeit aufweist. Diese Aufgabe wird ausgehend von dem Oberbegriff des Hauptanspruchs durch dessen kennzeichnenden Merkmale gelöst.

Der wesentliche Vorteil der Erfindung liegt in der Rückführung der mit Feuchte beladenen Luft. Hierfür sind jedoch spezielle Trocknungseinrichtungen erforderlich. Eine solche Trocknungseinrichtung ist beispielsweise aus der DE 31 31 471 C3 bekannt. Diese Vorveröffentlichung beschreibt eine Trocknungseinrichtung zum Trocknen von Abluft aus Schüttguttrocknungsbehältern, wobei die Abluft durch wenigstens eine mit Absorptionsmittel gefüllte Kammer geführt und in einem geschlossenen Kreislauf dem Trocknungsbehälter wieder zugeleitet wird. Die mit Absorptionsmittel gefüllten Kammer wird in zeitlichen Abständen mit einem zweiten Luftkreislauf regeneriert. Anstelle von Schüttguttrocknung kann diese Vorrichtung auch zum Trocknen des Spritzgießwerkzeugs eingesetzt werden.

Es ist bei der Erfindung weiterhin von Vorteil, daß die Strömungsrichtung in der gekapselten Werkzeugkammer im Gleichstrom mit der natürlichen Wasserdampfströmungsrichtung erfolgt. Da Wasserdampf leichter als Luft ist, steigt dieser nach oben, deshalb wird die trockene Spülluft ebenfalls von unten nach oben geführt und dort entnommen.

Bei einem Spritzgießwerkzeug müssen die hergestellten Teile entweder mit einem Roboterarm entnommen oder mittels Auswerfer abgeworfen und einem Behälter zugeführt werden. Hierzu sind öffnungen in der Kammer bzw. in dem abgekapselten Gehäuse erforderlich. Diese Öffnungen sind zur Vermeidung unnötig hoher Leckluftraten mittels Klappen verschlossen.

In einer Ausgestaltung der Erfindung ist vorgesehen, die Trockenluft über ein Verteilerelement, zum Beispiel ein spezielles Lochblech, in die Werkzeugkammer einzuführen. Damit wird erreicht, daß die Strömung in der Kammer möglichst laminar verläuft, so daß eine relativ gleichmäßige Luftverteilung über die gesamte Querschnittsfläche der abgekapselten Kammer erzielt wird.

Zur weiteren Optimierung der Luftverteilung ist vorgesehen, das Lochblech mit einem definierten Druckverlust, zum Beispiel durch die Anordnung von Düsen oder Querschnittsverengungen auszustatten. Der Druckverlust an dem Lochblech ist auf ein optimales Strömungsverhalten einstellbar.

Selbstverständlich kann ein Spritzgießwerkzeug nicht vollständig im Sinne einer absoluten Dichtheit der Kammer gekapselt werden. Deshalb wird die mit Feuchtigkeit beladene, aus der Kammer zu entnehmende Luft über ein Ventil abgeführt. Mittels des Ventils kann ein definierter Überdruck in der Kammer eingestellt werden, so daß an Leckstellen keine Feuchtigkeit eintreten sondern nur Trockenluft austreten kann.

Gemäß einer weiteren Ausgestaltung der Erfindung wird die zugeführte Trockenluft ohne eine Zwischenkühlung unmittelbar von der Trocknungseinrichtung an das Werkzeug herangeführt. Üblicherweise ist eine Kühlung erforderlich, damit die einströmenden Trockenluft das Werkzeug nicht wesentlich erwärmt. Da es sich bei dem erfindungsgemäßen Trocknungsverfahren jedoch um relativ geringe Luftmengen handelt, ist auch die übertragene Wärmemenge äußerst gering, so daß eine Prozeßluftkühlung nicht erforderlich ist. Zur weiteren Optimierung des Verfahrens wird gemäß einer vorteilhaften Weiterbildung der Erfindung vorgeschlagen, bei einer Unterbrechung des Produktionsvorgangs, wie dies zum Beispiel bei einer Reparatur des Werkzeugs oder bei einer Wartungstätigkeit entsteht, die Kühltemperatur auf einen Punkt anzuheben der oberhalb der Taupunkttemperatur liegt. Dieser Temperaturpunkt beträgt beispielsweise 30 °C. Damit läßt sich eine Kondensatbildung am Werkzeug während der Produktionsunterbrechung wirksam verhindern.

Die aus der Kammer entweichende Leckluft wird durch Frischluft ersetzt. Die Frischluft wird der Trocknungseinrichtung zugeführt. Hierzu ist der Trocknungseinrichtung eine Vorentfeuchtungseinrichtung vorgeschalten. Diese Einrichtung besteht aus einem Wärmetauscher mit dem die eintretende Frischluft auf eine Temperatur von 5 °C bis 10 °C abgekühlt wird. Dem Wärmetauscher nachgeschaltet ist eine Aerosolabscheidung mit der die auskondensierten Wassertröpfchen abgeschieden werden.

Gemäß einer weiteren Ausgestaltung der Erfindung kann der Luftaustritt bzw. das Verteilerelement unmittelbar am Werkzeug angeordnet sein. So kann beispielsweise das Verteilerelement unterhalb des Werkzeugs befestigt werden oder auch in das Werkzeug integriert sein. In diesem Fall befinden sich im Werkzeug an entsprechenden Stellen Luftauslaßdüsen durch welche die trockene Luft ausströmt und eine Kondensatbildung im kritischen Bereich des Werkzeugs verhindert.

Ausführungsbeispiele der Erfindung sind in den Zeichnungen dargestellt und werden im folgenden näher erläulert. Die Zeichnungen zeigen:
- Figur 1: eine schematisch dargestellte Spritzgießmaschine,
- Figur 2: eine Trocknungseinrichtung,
- Figur 3: eine Detaildarstellung der Vorentfeuchungseinrichtung.

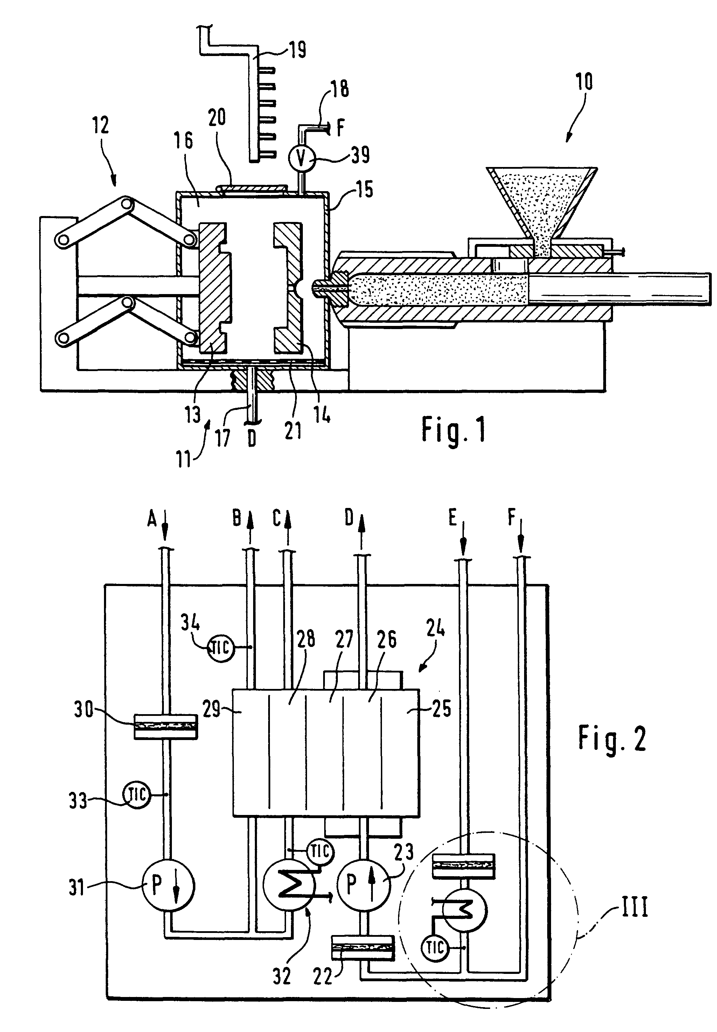

Die in Figur 1 dargestellte Spritzgießmaschine besteht aus einer Plastifiziereinheit 10, einem Werkzeug 11 und einer Schließeinheit 12. Das Werkzeug 11 besteht wiederum aus zwei Werkzeughälften 13, 14 die im geöffneten Zustand dargestellt sind. Das Werkzeug 11 ist von einem allseits geschlossenen Gehäuse 15 umgeben, das damit ein Kammervolumen 16 schafft. Im unteren Bereich dieses Gehäuses 15 ist eine Lufteintrittsöffnung 17 mit einem Anschluß D, im oberen Bereich ist eine Luftaustrittsöffnung 18 mit einem Anschluß F dargestellt. Zur Entnahme der im Werkzeug produzierten Kunststoffspritzgießteile ist ein Roboter- oder Entnahmearm 19 oberhalb des Gehäuses 15 angeordnet. Dieser taucht in das Gehäuse 15 bei geöffneter Klappe 20 ein, entnimmt dort die Teile und übergibt sie in eine hier nicht dargestellte Weiterbearbeitungsstation. Im unteren Bereich des Gehäuse 15 befindet sich eine Luftverteileinrichtung 21 in Form eines Lochbleches das einen definierten Druckverlust erzeugt. Das Lochblech ist beispielsweise mit bestimmten Düsenöffnungen ausgestattet. Durch diesen Luftverteiler (21) wird erreicht, daß die Strömung in der Kammer möglichst laminar verläuft. Hierzu ist vor allem eine relativ gleichmäßige Luftverteilung über die Querschnittsfläche notwendig. Die über den Anschluß D einströmende trockene Luft verdrängt damit feuchtigkeitsbeladene Umgebungsluft und verhindert somit eine Kondensation von Luftfeuchigkeit an den beiden Werkzeughälften. Das Werkzeug wird zur Beschleunigung des Spritzgießprozesses gekühlt. Das Kühlen erfolgt durch hier nicht dargestellte Kühlmittelkanäle im Werkzeug. Die Kühlmitteltemperatur beträgt vorzugsweise 5 °C.

Es besteht auch die Möglichkeit, die Luftverteilung also den Luftverteiler 21 direkt in das Spritzgußwerkzeug zu integrieren. Eine Verteilerdüse oder Verteilerdüsenanordnung kann direkt an den Werkzeugunterkanten angebracht werden. Von diesen Düsen aus streicht die zum Spülen benötigte Trockenluft über das Werkzeug und hält dieses somit von Kondenswasser frei.

Da das Gehäuse 15 allseits geschlossen ist und innerhalb des Gehäuses ein geringer überdruck herrscht, ist gewährleistet, daß keine feuchtebeladene Außenluft in das Gehäuse eindringt. Da außerdem Feuchtigkeit durch den Spritzgießvorgang nicht oder nur in äußerst geringen Mengen entsteht, reicht ein geringer Trockenluftstrom aus, um eine Kondensation zu verhindern. Die Luft, welche aus der Werkzeugkammer abströmt, gelangt über die Luftaustrittsöffnung 18 zu der Anschlußstelle F.

In Figur 2 ist eine Trocknungseinrichtung für die Trocknung von Luft dargestellt. Eine solche Trocknungseinrichtung ist beispielsweise auch in der DE-PS 31 31 471 beschrieben. Die über den Luftaustrittsöffnung 18 abströmende Luft gelangt zu dem Anschluß F, von dort über ein Filter 22 und eine Förderpumpe 23 zu der eigentlichen Trocknungseinrichtung 24. In dieser Trocknungseinrichtung wird die Feuchtigkeit der Luft entzogen und die entfeuchtete Luft über den Anschluß D wieder dem Werkzeug 11 zugeführt. Die Trocknungseinrichtung 24 ist ein sogenannter Karusseltrockner, das heißt, während drei Kammern 25, 26, 27 zur Trocknung der Luft dienen, werden die weiteren Kammern 28, 29 regeneriert. Zur Regenerierung wird über den Anschluß A und ein Filter 30 sowie einer Förderpumpe 31 und einer Heiz- und Regeleinrichtung 32 erhitzte Luft durch die Kammer 28 gefördert. Diese erhitzte Luft entnimmt dieser Kammer die Feuchtigkeit und führt sie über den Anschluß C ab. Durch die Kammer 29 strömt ebenfalls die über den Anschluß A zugeführte Luft, allerdings ist diese nicht erwärmt sondern dient zum Kühlen dieser Kammer. Die Kühlluft strömt über den Anschluß B ab. In dem System sind weiterhin Temperatursensoren 33, 34 mit Steuereinrichtungen angeordnet.

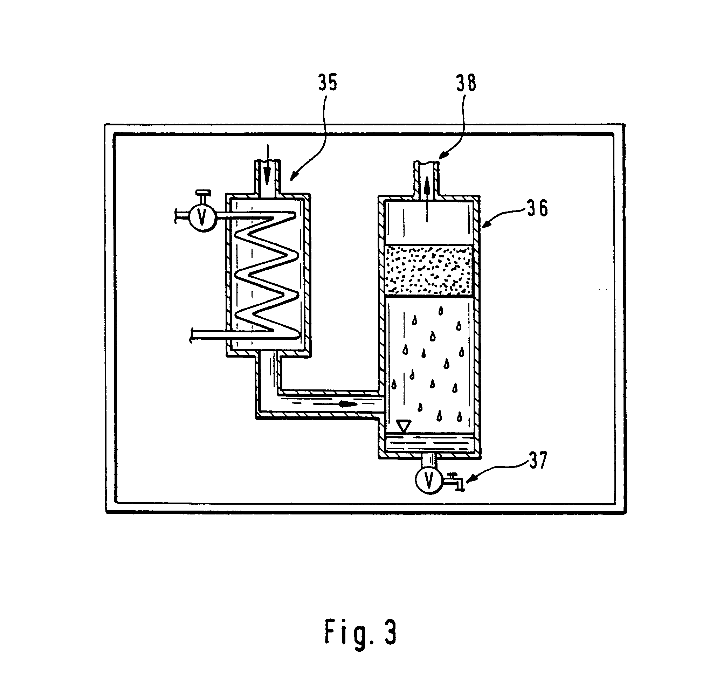

Zum Zuführen von Frischluft dient der Anschluß E. Dieser dient zum Ersetzen der aus dem Kreisprozeß entweichenden Leckluft. Die Frischluft wird über eine Vorentfeuchtungseinrichtung gemäß Figur 3, welcher in einer vergrößerten Darstellung das Detail A aus Figur 2 zeigt, näher erläutert.

Die Vorentfeuchtungseinrichtung besteht aus einem Wärmetauscher 35. In diesem wird die eintretende Luft auf eine Temperatur von ca. 5 bis 10 °C abgekühlt. Dem Wärmetauscher nachgeschaltet ist eine Aerosolabscheidung 36, mit der die auskondensierten Wassertröpfchen abgeschieden werden. Das Wasser kann mittels des Auslasses 37 entnommen werden. Die vorentfeuchtete Luft gelangt über den Ausgang 38 zu dem in Figur 2 dargestellten Filter 22.

## Patentansprüche

1. Verfahren zum Trocknen der Oberfläche eines Werkzeugs, insbesondere einen gekühlten Spritzgießwerkzeugs mit einem Trockenluftstrom, wobei das Werkzeug mit einem Gehäuse, welches allseits geschlossen ist, abgekapselt ist und wobei in dem gekapselten Gehäuse (15) der Trockenluftstrom im wesentlichen von unten an das Werkzeug (11) herangeführt wird und oberhalb des Werkzeugs gesammelt und über eine Rückführleitung (18) zu einer Trocknungseinrichtung (22 - 33) geführt wird zur Trocknung des mit Feuchtigkeit beladenen Luftstroms,
wobei innerhalb des Gehäuses (15) ein geringer Überdruck herrscht derart, daß keine feuchtebeladene Anssenluft in das Gehäuse (15) eindringt und wobei die im Werkzeug (11) produzierten Teile durch eine, oben am Gehäuse (15) angeordnete, verschließbare klappe (20) entnommen werden.

2. Verfahren nach Anspruch 1, **dadurch gekennzeichnet, daß** unterhalb des Werkzeugs (11) ein Verteilerelement (21) vorgesehen ist, welches den Luftstrom gleichmäßig in den zu trocknenden Raum (16) führt.

3. Verfahren nach Anspruch 1 oder 2, **dadurch gekennzeichnet, daß** am Verteilerelement (21) ein definierter Druckverlust einstellbar ist.

4. Verfahren nach Anspruch 1, **dadurch gekennzeichnet, daß** der mit Feuchtigkeit beladene Luftstrom aus dem Bereich des Werkzeugs (11) über ein steuerbares Ventil (39) der Trocknungseinrichtung (22 bis 33) zugeführt wird.

5. Verfahren nach einem der vorherigen Ansprüche, **dadurch gekennzeichnet, daß** der Trockenluftstrom von der Trocknungseinrichtung (22 bis 33) unmittelbar dem Werkzeug (11) zugeführt wird.

6. Verfahren nach einem der vorherigen Ansprüche, **dadurch gekennzeichnet, daß** die Werkzeugtemperatur bei einer Unterbrechnung des Produktionsprozesses auf eine Temperatur angehoben wird, die oberhalb des umgebungsbedingten Taupunktes liegt.

7. Verfahren nach einem der vorherigen Ansprüche, **dadurch gekennzeichnet, daß** die aus dem Prozeß entweichende Leckluft durch Frischluft, welche der Trocknungseinrichtung (22 bis 33) zugeführt wird, ersetzt wird.

8. Verfahren nach Anspruch 7, **dadurch gekennzeichnet, daß** die Frischluft über eine Vorentfeuchungseinrichtung (35 bis 38) geführt wird, wobei die Vorentfeuchtungseinrichtung einen Wärmetauscher (25) sowie einen Aerosolabscheider (36) aufweist.

9. Verfahren nach einem der vorherigen Ansprüche, dadurch gekenzeichnet, daß der Luftaustritt unmittelbar am Werkzeug (11) erfolgt oder das Verteilerelement unmittelbar am und/oder im Werkzeug (11) angeordnet ist.

## Claims

1. Method of drying the surface of a tool, more especially a cooled injection moulding tool, by means of a dry air current, wherein the tool is enclosed in a housing which is closed in all directions, and wherein the dry air current is supplied to the tool (11) substantially from below in the encasing housing (15), said current of air being collected above the tool and being conducted via a return pipe (18) to a drying means (22 - 33) to dry the air current which is laden with moisture, wherein slight overpressure prevails within the housing (15) such that no moisture-laden external air may enter the housing (15), and wherein the parts produced in the tool (11) are removed through a sealable flap (20) disposed at the upper end of the housing (15).

2. Method according to claim 1, **characterised in that** a distributing member (21) is provided beneath the tool (11) and conducts the air current uniformly into the area (16) to be dried.

3. Method according to claim 1 or 2, **characterised in that** a specific pressure loss can be set at the distributing member (21).

4. Method according to claim 1, **characterised in that** the air current, which is laden with moisture, is supplied to the drying means (22 to 33) from the region of the tool (11) via a controllable valve (39).

5. Method according to one of the previous claims, **characterised in that** the dry air current from the drying means (22 to 33) is supplied directly to the tool (11).

6. Method according to one of the previous claims, **characterised in that**, in the event of the production process being interrupted, the tool temperature is raised to a temperature which lies above the environmental condensation point.

7. Method according to one of the previous claims, **characterised in that** the leakage air, which escapes from the process, is replaced by fresh air supplied to the drying means (22 to 33).

8. Method according to claim 7, **characterised in that** the fresh air is conducted via a preliminary moisture-extracting means (35 to 38), the preliminary moisture-extracting means having a heat exchanger (25) and an aerosol separator (36).

9. Method according to one of the previous claims, **characterised in that** the air is discharged directly at the tool (11), or the distributing member is disposed directly on and/or in the tool (11).

## Revendications

1. Procédé pour sécher la surface d'un outil notamment d'un outil d'injection, refroidi par un courant d'air de séchage, selon lequel l'outil est encapsulé par un boîtier fermé de tous côtés et dans le boîtier (15) d'encapsulage, le courant d'air de séchage arrive principalement par en dessous vers l'outil (11) pour se collecter au-dessus de l'outil et être conduit par une conduite de retour (18) vers une installation de séchage (22-33) pour le séchage de la veine d'air chargée d'humidité, et à l'intérieur du boîtier (15), il règne une légère surpression pour que de l'air extérieur chargé d'humidité ne puisse pas pénétrer dans le boîtier (15), et
les pièces produites dans l'outil (11) sont extraites par un volet (20) prévu à la partie supérieure du boîtier (15) et qui peut être fermé.

2. Procédé selon la revendication 1,
**caractérisé par**
un élément répartiteur (21) prévu sous l'outil (11), cet élément (21) répartissant régulièrement la veine d'air dans la chambre (16) à sécher.

3. Procédé selon les revendications 1 ou 2,
**caractérisé en ce que**
l'élément répartiteur (21) règle une perte de charge déterminée.

4. Procédé selon la revendication 1,
**caractérisé en ce que**
la veine d'air chargée d'humidité est évacuée de la zone de l'outil (11) par l'intermédiaire d'une vanne commandée (39) vers l'installation de séchage (22-33).

5. Procédé selon l'une des revendications précédentes,
**caractérisé en ce que**
la veine d'air de séchage est fournie par l'installation de séchage (22-33), directement à l'outil (11).

6. Procédé selon l'une des revendications précédentes,
**caractérisé en ce qu'**
en cas d'interruption du procédé de fabrication, la température de l'outil est relevée à une température située au-dessus du point de rosée lié à l'environnement.

7. Procédé selon l'une des revendications précédentes,
**caractérisé en ce que**
l'air de fuite du procédé est remplacé par de l'air frais fourni par l'installation de séchage (22-33).

8. Procédé selon la revendication 7,
**caractérisé en ce que**
l'air frais est conduit à travers une installation de prédéshumidification (35-38), cette installation ayant un échangeur de chaleur (25) et un séparateur d'aérosol (36).

9. Procédé selon l'une des revendications précédentes,
**caractérisé en ce que**
la sortie d'air se fait directement sur l'outil (11), ou l'élément répartiteur se trouve directement sur et/ou dans l'outil (11).
